# EUROPEAN PATENT APPLICATION

(11) **EP 3 101 609 A1**
(43) Date of publication of application: **07.12.2016**
(21) Application number: 15740681.0
(22) Date of filing: 22.01.2015
(51) Int. Cl.: G06Q 20/40

(54) **DUAL-CHANNEL IDENTITY AUTHENTICATION SELECTION DEVICE, SYSTEM AND METHOD**

(30) Priority: 27.01.2014 CN 201410037680; 15.08.2014 CN 201410405817
(71) Applicant: Shao, Tong, Nanjing, Jiangsu 210014 (CN)
(72) Inventor: Shao, Tong, Nanjing, Jiangsu 210014 (CN)
(74) Representative: ProI European Patent Attorneys
(86) International application number: PCT/CN2015/071325
(87) International publication number: WO 2015/110043

(57) **Abstract**

The purpose of the present invention is to propose a dual-channel identity authentication selection device, system and method. During payment or login, a security method is involved, where one channel is used to transmit a user name, and identity authentication data and devices are selected by a selection device according to the transformed user name, and the other channel is used to transmit the data to a server. When an insecure computer terminal is used, another computer terminal can be used to cooperate with a server to achieve secure payment or login. The method can be used for network payment, and can simply and securely solve the problems of identity authentication and payment data security in the process of using services of banks, games and the like by combining with a good cryptographic protocol.

## Description

### Technical Field

The invention belongs to the field of information security, and relates to a dual-channel identity authentication selection device, system and method, in particular to a device, system and method for respectively transmitting identification data and identity authentication data by two channels, and selecting the identity authentication data according to the transformed identification data.

### Background

A user generally enters a user name and a PIN code to log in a common website. After verifying the correctness of the user name and the corresponding PIN code, the website confirms the validity of the user login. Compared with website login, in POS payment of a bank, the user name is equivalent to a payment account number of the bank, so is the PIN code. But two more factors are apparently involved, i.e., receipt account and transaction amount. The receipt account is in fact equivalent to a client computer address or the address of a program on the client computer, that is, the address or unique identification of a POS terminal decides the receipt account thereof in the POS trade system. Therefore, the difference between the website login and bank payment is substantially a factor, i.e., amount.

Elements in website login include a user name, a PIN code and a currently used computer;

Payment elements include a payment account, a PIN code, a currently used POS terminal (receipt account) and an amount.

The payment account and the user name are essentially the means by which a server searches a user and the corresponding identity authentication data. When the identity authentication data matches the payment account (user name), corresponding operation can be performed. In such way, the payment account and the user name are essentially identification data (identifying a user), and the PIN code is essentially identity authentication data. When the identification data matches the identity authentication data, the bank or website will work accordingly. Of course, other identity protocols are available, including zero-knowledge identity authentication protocol, and the protocols are essentially used for transmitting identity authentication data.

The user subconsciously believes that payment-login is decided by two essential factors, i.e., a physical bank card (payment account or user name) and a PIN code with memory, and believes that the payment-login is safe as long as the two factors are not disclosed to an attacker at the same time. In fact, the security of the bank card is just based on the "security hypothesis". Similarly, the website login currently involves the two factors, i.e., a user name and a PIN code.

For the sake of security, most users unconsciously set their hope on nondisclosure of the PIN code, hope that the PIN code can help them guarantee the security when their bank cards (or user names) are lost, and believe that the PIN code will not be disclosed easily. Therefore, the public develops the "security habit" of keeping the PIN code well. From the perspective of security, in order to protect the PIN code of a user, it's better to enter the PIN code in the user's mobile phone instead of entering the real PIN code of a bank card (or user name) in the computer (mobile POS terminal) of a merchant or others to improve the experience of guaranteeing security.

In the application document, various cryptographic techniques are required for illustration of the technical scheme sometimes. RSA is used for illustration of asymmetric cryptosystem, RSA_{XX private} key is a decryption algorithm or signature algorithm, and RSA_{XX public key} is an open algorithm. Hash () is a hash function used for making an encryption identification for data, and SM3 is another hash function.

### Summary of the Invention

Account payment is especially widely used in network payment due to its convenience. For the sake of security, we can adopt two channels to transmit the account and identity data respectively for payment, or log in by two channels to transmit the user name and PIN code. That is, identification data and identity authentication data are respectively transmitted by the two channels to attain the security objective.

However, in the dual-channel security technology, a device used to generate and transmit identity authentication data is often a mobile phone. Data input is not convenient as phone screen is small. The mobile phone is relatively safe, thus identity authentication data and method to be entered or selected can be prestored in the mobile phone, or transferred to the mobile phone via network storage. In such way, a user can enter an OK (or a simple PIN code) only to generate, enter and transmit identity authentication data to a server. As a mobile phone can store PIN codes (identity authentication data) of multiple bank cards, PIN codes (identity authentication data) logged in at multiple websites, multiple identity authentication protocols and cooperative hardware; there is a problem about how to select appropriate identity authentication data and devices.

According to one aspect of the invention, a dual-channel identity authentication selection system is provided. The system comprises an identification device, used for acquiring identification data and transmitting the identification data to a security device; a selection device, used for selecting and acquiring identity authentication data and transmitting the identity authentication data to the security device; and a security device, used for acquiring the identity authentication data from the selection device according to the identification data from the identification device, and associating the identification data with the identify authentication data. Wherein the security device is respectively connected with the identification device and the selection device via network; the identification device transmits the identification data to the security device; the security device transmits the identification data or transformed identification data to the selection device; the selection device selects the identity authentication data or generates the identity authentication data or selects the identity authentication device and the security device to interactively identify the authentication information according to the received identification data or transformed identification data; the selection device transmits the identity authentication data associated with the identification information to the security device; and the security device performs payment login, i.e., further operations according to the identification data and the identity authentication data.

Further, the system comprises an associated server, wherein the selection device is connected with the associated server, and the associated server is connected with the security device; the selection device acquires the identity authentication data and transmits the identity authentication data to the associated server, the associated server associates the identification data with the identity authentication data, and then transmits the identity authentication data to the security device.

According to another aspect of the invention, a dual-channel identity authentication selection device is provided. The device comprises a communication device, used for connecting a server (security device) and acquiring the transformed identification data; a selection device, used for selecting the identity authentication data, or generating the identity authentication data, or generating the identity authentication data, or selecting the identity authentication device and the security device to interactively identify the information according to the received transformed identification data; an identity authentication data device, used for storing a corresponding table between the transformed identification data and the identity authentication data or device; wherein the communication device is connected with the selection device, the communication device is connected with an external device (security device), and the selection device is connected with the identity authentication data device; the communication device is connected with the external device, and receives the transformed identification data from the external device; the communication device transmits the transformed identification data to the selection device; the selection device selects the corresponding identity authentication data, device and method according to the transformed identification data and a selection list in the identity authentication data device; and the selection device transmits the corresponding identity authentication data to the external device through the communication device.

According to another aspect of the invention, a dual-channel identity authentication selection method is provided. The method comprises the following steps of: transmitting the identification data from the identification device to the security device; transmitting the transformed identification data from the security device to the selection device; selecting the identity authentication data, or generating the identity authentication data, or selecting the identity authentication device by the selection device according to the received transformed identification data; transmitting the identity authentication data associated with the identification data from the selection device to the security device; and performing payment login (i.e., further operation) by the security device according to the identification data and the identity authentication data.

Further, the step of transmitting the transformed identification data from the security device to the selection device further comprises the following steps of: transmitting the identification data or transformed identification data from the security device to the associated server; and transmitting the received or re-transformed identification data from the associated server to the selection device.

Generally, the identity authentication data is a PIN code.

Practically, the method further comprises a step of transmitting amount data from the identification device to the security device.

For easy to use, a fingerprint recognition device is provided. Only after the device recognizes a correct fingerprint, the selection device can effectively select the identity authentication data, or generate the identity authentication data or select the identity authentication device, and transmit the identity authentication data to a validation device and the security device.

Preferably, the method further comprises a step of transmitting amount data from the security device to the validation device.

### Brief Description of the Drawings

The invention will be described in combination with the following drawings.
Fig. 1 is a schematic diagram of a dual-channel identity authentication selection system and a method of preferred embodiment 1;
Fig. 2 is a schematic diagram of a dual-channel identity authentication selection system and a method of preferred embodiment 2;
Fig. 3 is a schematic diagram of a dual-channel identity authentication selection system and a method of preferred embodiment 3; and
Fig. 4 is a schematic diagram of a dual-channel identity authentication selection device of preferred embodiment 4.

### Detailed Description of the Preferred Embodiment

In the specific examples of the invention, F stands for payment account, S stands for receipt account, M stands for amount, and PIN code stands for personal identification code.

### [Example 1]

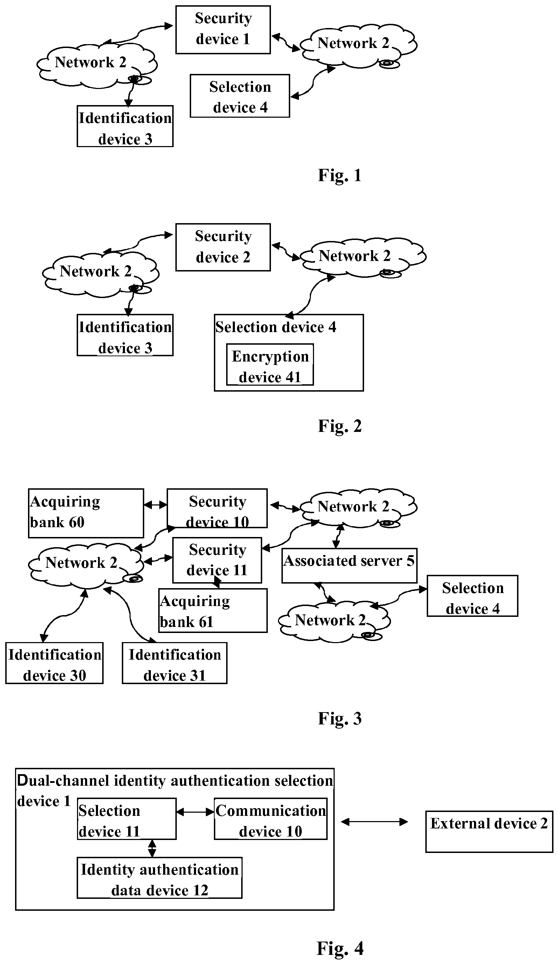

The first example of the invention is shown in Fig. 1, in which identification data F0 is entered by using an identification device (3), and PIN0 is entered through a selection device (4); or identification data F1 is entered by using the identification device (3), and PIN1 is entered through the selection device (4). The identification data F0 and the PIN0 jointly determine the legitimacy of the use, and the identification data F1 and the PIN1 jointly determine the legitimacy of another use. The identification device (3) transmits the identification data F0 or F1 to a security device (1), and the selection device (4) transmits the PIN0 or PIN1 to the security device (1) to realize transmission by two channels respectively, then the security device (1) combines the received data to form a complete payment-login data to perform further operations. This is equivalent to that a person has multiple accounts and the corresponding PIN codes in a bank (security device), or a person has multiple accounts and the corresponding PIN codes on a website (security device, e.g., game website).

A dual-channel identity authentication selection associated with a method and system in the example is shown in Fig. 1. The system consists of a security device (1), an identification device (3), a selection device (4) and a network (2). The security device (1) is respectively connected with the identification device (3) and the selection device (4) via the network (2).

The identification device (3) comprises the available identification data F0 or F1 and an address S. The selection device (4) comprises a selection list (hash (F, R), PIN, P), where F is identification data, P is an associated data P corresponding to the identification data F, and PIN is a PIN code corresponding to the identification data F. The security device (1) comprises a user list (F, P, R, K), where F is identification data, P is associated data corresponding to the identification data F, R is a random number, and K is associated distinguishing data.

The corresponding steps of the associated data P are as follows:
1. any security computer terminal logs in the security device (1);
2. the computer enters the identification data F0, the associated data P and the distinguishing data K0, and transmits such data to the security device (1);
3. the security device (1) generates a random number R0, and F0, P and K0, and sets up user list items (F0, P, R0, K0).

The corresponding steps of the PIN0 of the selection device (4) are as follows:
1. the selection device (4) acquires the P and the K0, connects the security device (1), and transmits the P and the K0 to the security device (1);
2. the security device (1) receives the P and the K0, finds the (F0, P, R0, K0) according to the user list to obtain the F0 and the R0, then computes and transmits the hash (F0, R0) to the selection device (4);
3. the selection device (4) enters the corresponding PIN0 according to the hash (F0, R0) and P, and sets up selection list items (hash (F0, R0), PIN0, P).

The corresponding steps of the associated data P of the F1 are as follows:
1. any security computer terminal logs in the security device (1);
2. the computer enters the identification data F1, the associated data P and the distinguishing data K1, and transmits such data to the security device (1);
3. the security device (1) generates a random number R1 and F1, P and K1, and sets up user list items (F1, P, R1, K1).

The K0 and the K1 are used to make a distinction when the P is the same. The number is only used for initialization of association.

The corresponding steps of the PIN1 of the selection device (4) are as follows:
1. the selection device (4) acquires the P and the K1, and connects the security device (1) to transmit the P and the K1 to the security device (1);
2. the security device (1) receives the P and the K1, finds the (F1,P,R1,K1) according to the user list to obtain the F1 and the R1, and transmits the hash (F1, R1) to the selection device (4);
3. the selection device (4) enters the corresponding PIN1 according to the hash (F1, R1) and P, and sets up selection list items (hash (F1, R1), PIN1, P).

The steps of payment-login are as follows:
1. the identification device (3) with an address S (receipt account S) obtains payment amount M, and enters the identification data F0 (payment account F0); then said request data (M, S, F0) is transmitted to the security device (1) via the network (2);
2. the security device (1) receives the (M, S, F0), and obtains (F0, P, R0, K0) from the user list according to the F0;
3. the selection device (4) acquires the P, connects the security device (1), and transmits the P to the security device (1);
4. the security device (1) is associated to the selection device (4) according to the P, and transmits the hash (F0, R0) to the selection device (4);
5. the selection device (4) searches the selection list according to the hash (F0, R0) to obtain (hash (F0, R0), PIN0, P), i.e., the stored (PIN0, P), then displays an OK button, and transmits the (PIN0, P, hash (F0, R0)) to the security device (1) via the network (2) after a user presses the OK button;
6. the security device (1) obtains (PIN0, F0) according to the (PIN0, P), the user list (F0, P, R0, K0) and the hash (F0, R0), obtains (PIN0, M, S, F0) matching the PIN0 according to the (M, S, F0) and the (PIN0, F0), and determines whether to perform payment-login or send payment data (PIN0, M, S, F0) to an acquiring bank according to the relationship between the F0 and the PIN0;
7. if the payment-login data is correct, a payment-login completion message is returned to the identification device (3), otherwise a payment-login error message is returned to the identification device (3) and/or selection device (4) via a network (3).

It is clear that when the identification device (3) enters the identification data F1, the selection device (4) can correctly select the PIN1, so that the selection device (4) can select and use the stored PIN0 or PIN1, that is, the stored PIN0 is selected according to the hash (F0, R0) from the security device (1).

The P in the example is data for association, provided that the P associated with the payment account F0 in the security device (1) is consistent with the P in the selection device (4), that is, P can be a string of data that is only used for association of two parts of transaction data. The selection device (4) can hide the network address thereof, and sends (PIN0, P) to the security device (1). The P can also be a network address of the selection device (4), such as a QQ number, WeChat number, MicroBlog number or email address, so as to use the network address of the selection device (4) to additionally judge data legally from the network addresses. The system and the method for respectively transmitting the payment account F0, amount M and PIN0 to the security device (1) by two channels are realized in the example 1 to prevent the possibility of intercepting both the bank card number (payment account F0) and the PIN0 by lawbreakers, improving the security of existing systems.

The security of the example lies in that the PIN0 is entered into a mobile phone (selection device (4)) of a user instead of being entered into the identification device (3). It is clear that the selection device (4) can transmit the PIN0 to the security device (1) by cryptography. For example, the selection device (4) executes RSA_{public} security key (PIN0, P, hash (F0, R0)), the security device (1) executes RSA_{private security key} (RSA_{public security key} (PIN0, P, hash (F0, R0))), the RSA_{private security key} is not disclosed and owned by the security device (1), the RSA_{public security} key and the RSA_{private security} key are a pair of public and private keys. Of course, a symmetric cryptosystem can be also used, which involves a key distribution protocol. In a word, the cryptographic protocol is used to ensure the security of data in the transmission process.

If the associated data P is a network address, the information has been included in the transmission of the PIN0 to the address of the security device (1), thus the (PIN0, hash (F0, R0)) can be encrypted instead of encrypting the (PIN0, P, hash (F0, R0)). As the P is a network address, the method can further comprise the step of transmitting the transaction data (M, S) from the security device (1) to the selection device (4), enabling the user to validate the correctness of the transaction data.

In the example, the key points in the payment-login process are the step 4 and the step 5. That is, the security device (1) transmits the transformed identification data, then the selection device (4) selects the corresponding PIN code (or identity authentication protocol, identity authentication device) according to the transformed identification data. Theoretically, the function can be realized without transformation, but the coexistence of plain identification data and plain identity authentication data in the selection device (4) offsets the advantage of dual-channel information security. In addition, the random number R is configured to prevent a hacker exhaustively searching and guessing the F to obtain the combination of F and PIN code according to the hash (F) and the relationship between the hash (F) and the PIN code when the hacker completely controls the selection device (mobile phone). The R is not mandatory, but the configuration makes it securer.

Therefore, the process of the system is as follows: (step 1) the identification device transmits the identification data to the security device; (step 2) the security device transmits the transformed identification data to the selection device; (step 3) the selection device selects the identity authentication data or generates the identity authentication data or selects the identity authentication device according to the received transformed identification data; (step 4) the selection device transmits (or interacts with the security device) the identity authentication data associated with the identification data to the security device; and (step 5) the security device performs further operations according to the identification data and the identity authentication data.

In addition, in the step 5 in the example, the selection device (4) displays an OK button, and transmits the corresponding PIN code prestored when the user presses the OK button. It is clear that the OK button can be displayed and pressed by fingerprint recognition technology to improve the security. In other words, when the OK button is displayed, the user puts his/her fingerprint on a fingerprint reader, then the fingerprint reader reads the fingerprint information, then compares the read fingerprint information with the prestored fingerprint information, and transmits the PIN code to the security device through the validation device if the read fingerprint information is consistent with the prestored fingerprint information. It is clear that if the PIN codes are stored in the fingerprint reader, the PIN codes cannot be transmitted in case of absence of the corresponding fingerprints even when the validation device (mobile phone) is lost, thus the PIN codes will not be disclosed when the validation device is attacked by trojans or hackers. If the fingerprint reader is a chip, the identity authentication data is not a simple PIN code but an advanced identity authentication protocol, fingerprint recognition is to validate the identity authentication protocol, similar to a CPU card of a bank, then the requirements for the security of the validation device operating system can be greatly lowered.

### [Example 2] (Security encryption device)

The second example of the invention is shown in Fig. 2, in which identification data F0 is entered by using an identification device (3), and an encryption device (41) of a selection device (4) is used to generate high security identity authentication data; or an identification data F1 is entered by using the identification device (3), and a PIN1 is entered through the selection device (4). The identification data F0 and the high security identity authentication data jointly determine the legitimacy of the use, and the identification data F1 and the PIN1 jointly determine the legitimacy of another use. The identification device (3) transmits the identification data Fx to a security device (1) (x is any identification data), and the selection device (4) transmits the corresponding identity authentication data to the security device (1) to realize transmission by two channels respectively, then the security device (1) combines the received data to form a complete login or payment data to perform further operations. This is equivalent to that a person has multiple accounts and the corresponding PIN codes in a bank (security device), or a person has multiple accounts and the corresponding PIN codes on a website (security device, e.g., game website), and a high security identity authentication method is applied to one of the accounts.

A dual-channel identity authentication selection associated with a method and system in the example is shown in Fig. 2. The system consists of a security device (1), an identification device (3), a selection device (4) and a network (2). The security device (1) is respectively connected with the identification device (3) and the selection device (4) via the network (2). The selection device (4) comprises an encryption device (41).

The identification device (3) comprises the available identification data F0 or F1 and an address S. The security device (1) comprises an RSA_{private security key} and a user list (F, P, R, K, B, RSA_{public data} key), where F is identification data, P is associated data corresponding to the F, R is a random number, K is associated distinguishing data, B is a high security mark, and the RSA_{public data} key is a high security public key corresponding to the F, and the encryption device (41) of the selection device (4) has an RSA_{private data} key and an RSA_{public security} key. The private security key is stored in the security device (1) and remains private, and the public security key is publicly available. The selection device (4) comprises a selection list (hash (F, R), PIN, P, B), F is identification data, R is a random number, P is associated data corresponding to the F, and B is a selection identification.

The corresponding steps of the associated data P are as follows:
1. any security computer terminal logs in the security device (1);
2. the computer enters the identification data F0, the associated data P, the distinguishing data K0 and the RSA_{public} data key, and transmits such data to the security device (1);
3. the security device (1) acquires a random number R0 and F0, P, K0 and RSA_{public data key}, and sets up user list items (F0, P, R0, K0, RSA_{public data key}).

The corresponding steps of the PIN0 of the selection device (4) are as follows:
1. the selection device (4) acquires the P and the K0, connects the security device (1), and transmits the P and the K0 to the security device (1);
2. the security device (1) searches the user list to obtain (F0, P, R0, K0, RSA_{public data key}), the F0, the R0 and the RSA_{public data key} according to the P and the K0, then computes and transmits the hash (F0, R0) and RSA_{public data key} to the security device (4);
3. the selection device (4) sends the RSA_{public data key} to the encryption device (41) according to the hash (F0, R0) and the RSA_{public data key} to validate the correspondence, then enters the PIN0 and sets up a selection list (hash (F0, R0), PIN0, P, B41), P is associated data, and B41 corresponds to the encryption device (41).

The corresponding steps of the associated data P of the F1 are as follows:
1. any security computer terminal logs in the security device (1);
2. the computer enters the identification data F1, the associated data P and the distinguishing data K1, and transmits such data to the security device (1);
3. the security device (1) acquires a random number R1 and F1, P and K1, and sets up user list items (F1, P, R1, K1).

The K0 and the K1 are used to make a distinction when the P is the same. The number is only used for initialization of association.

The corresponding steps of the PIN1 of the selection device (4) are as follows:
1. the selection device (4) acquires the P and the K1, and connects the security device (1) to transmit the P and the K1 to the security device (1);
2. the security device (1) finds (F1,P,R1,K1) from the user list according to the received P and K1 to obtain the F1 and the R1, and transmits the hash (F1, R1) to the selection device (4);
3. the selection device (4) enters the corresponding PIN1 and P according to the hash (F1, R1), and sets up selection list items (hash (F1, R1), PIN1, P, 0), the P is associated data, and B is 0, indicating that the identity authentication data corresponding to the identification data F1 is PIN1.

The steps of paymen login are as follows:
1. the identification device (3) with an address S (receipt account S) obtains payment amount M, and enters the identification data F0 (payment account F0); then said request data (M, S, F0) is transmitted to the security device (1) via the network (2);
2. the security device (1) receives the request data (M, S, F0), and obtains (F0, P, R0, K0, RSA_{public data key}) from the user list according to the F0;
3. the selection device (4) acquires the P, connects the security device (1), and transmits the P to the security device (1);
4. the security device (1) is associated to the selection device (4) according to the P and the user list (F0, P, R0, K0, RSA_{public data key}), obtains the corresponding RSA_{public data key} and RSA_{private data key} from the user list according to the request data (M, S, F0); then computes and transmits the RSA_{private security key} (RSA_{public data key}(M, S, F0)) and hash (F0, R0) to the selection device (4);
5. the selection device (4) receives the hash (F0, R0) and the RSA_{private security key} (RSA_{public data key}(M, S, F0)), searches the selection list to obtain (hash (F0, R0), PIN, P, B41) and a mark B41 of using the encryption device (41) according to the hash (F0, R0), and transmits the RSA_{private security key}(RSA_{public data key}(M, S, F0)) to the encryption device (41);
6. the encryption device (41) computes the RSA_{private data key}(RSA_{public security key}(RSA_{public data key}(M, S, F0)) to obtain (M, S, F0), then displays an OK button, and computes RSA_{public security key}(RSA_{private data key}(M, S, F0)) after the user presses the OK button (or enters the PIN0 allowed by the encryption device (41)); and the selection device (4) transmits the RSA_{public security key}(RSA_{private data key}(M, S, F0)) to the _{security} device (1) via the network (2);
7. the security device 1 computes the RSA_{public data key}(RSA_{private security key}(RSA_{public security key}(RSA_{private data key}(M, S, F0)) to obtain (M, S, F0) and an RSA_{private data key}(M, S, F0) digital signature, that is, the correctness of the digital signature has been validated. The security device (1) determines whether to pay or send payment data ((M, S, F0), RSA_{private data key}(M, S, F0)) to an acquiring bank according to the relationship with the digital signature.
8. if the digital signature is correct, a payment completion message is returned to the identification device (3), otherwise a payment error message is returned to the identification device (3) and/or selection device (4) via a network (3).

Basically the same as example 1, it is clear that when the identification device (3) enters the identification data F1, the selection device (4) can correctly select the PIN1. The difference from example 1 is that securer digital signature technology is used for the identification data F0, so that the selection device can select and use the stored identification data F0 or F1, that is, the selection device selects the security encryption device (41) according to the hash (F0, R0) information from the security device for high security cryptographic computation, and selects the stored PIN1 according to the hash (F1, R1) information.

The security of the example lies in that the digital signature of the encryption device is executed on the mobile phone of the user, thus there is no problem if the mobile phone operating system is not controlled by a hacker, and the hacker cannot make security attack as the identification data is not disclosed even when the mobile phone operating system is completely controlled by the hacker. The encryption device (41) has to enter a PIN0 to execute computation each time, so as to solve the problem of simple use after the mobile phone is lost, improving the security. Like example 1, a fingerprint recognition device can be incorporated instead of entering the PIN0. The usability is improved while improving the security. Of course, the tables of the validation device in example 2 can be imported into the encryption device (41), so that hackers and trojans cannot obtain original security data such as PIN1 and RSA_{private data key}.

In the example, the key points in the payment-login process are the steps 4, 5 and 6. That is, the security device transmits the transformed identification data, and the selection device selects the corresponding PIN code (or identity authentication protocol, identity authentication device) according to the identification data.

### [Example 3] (Associated server)

The third example of the invention is shown in Fig. 3, and an associated server (5) is included in the example to associate the identity authentication data with the payment account. The transaction data is transmitted through the channel of the identification device and the security device, and the identity authentication data (PIN code) is transmitted through the selection device and the channel of the associated server and the security device, then the security device combines the received data to form a complete payment data for payment.

A dual-channel identity authentication selection associated with a method and system in the example is shown in Fig. 3. The system consists of a security device (10), a security device (11), a selection device (4), an identification device (30), an identification device (31), an associated server (5), a network (2), an acquiring bank (60) and an acquiring bank (61). It is clear that the security device (10) and the acquiring bank (60) is one unit, the security device (11) and the acquiring bank (61) is another unit.

An identification data F0 is entered by using the identification device (30), then a PIN0 is entered through the selection device (4); or an identification data F1 is entered by using the identification device (31), then a PIN1 is entered through the selection device (4). The identification data F0 and the PIN0 jointly determine the legitimacy of the use, and the identification data F1 and the PIN1 jointly determine the legitimacy of another use. The identification device (30) transmits the identification data (F0) to the security device (10), the selection device (4) transmits the PIN0 to the associated server (5) and then to the security device (10) to realize transmission by two channels respectively, then the security device (10) combines the received data to form a complete login or payment data for further operations; the identification device (31) transmits the identification data (F1) to the security device (11), the selection device (4) transmits the PIN1 to the associated server (5) and then to the security device (11) to realize transmission by two channels respectively, then the security device (11) combines the received data to form a complete login or payment data for further operations.

This is equivalent to that a person has multiple accounts and the corresponding PIN codes in multiple banks (security device (10), security device (11)), or a person has multiple accounts and the corresponding PIN codes on multiple websites (e.g., multiple game websites).

A dual-channel identity authentication selection associated with a method and system in the example is shown in Fig. 3. The system consists of a security device (10), a security device (11), an identification device (30), an identification device (31), a selection device (4), an associated server (5), an acquiring bank (60), an acquiring bank (61) and a network (2). The security device (10) is connected with the identification device (30) and the associated server (5) via the network (2); the associated server (5) is connected with the selection device (4) via the network (2); the security device (10) is connected with the acquiring bank (60) (or connected via the network 2), and the security device (11) is connected with the identification device (31) via the network (2); the security device (11) is connected with the associated server (5) via the network (2); the associated server (5) is connected with the selection device (4) via the network (2); and the security device (11) is connected with the acquiring bank (61) (or connected via the network 2).

The identification device (30) comprises the available identification data F0 and an address S0 of the identification device (30); the identification device (31) comprises the available identification data F1 and an address S1 of the identification device (31); the associated server (5) comprises a user list (hash (F, R), P), where F is identification data, R is a fixed number in the security device, and P is an associated code corresponding to the F. The selection device (4) comprises a selection list (sm3 (hash (F, R)), PIN, P), where F is identification data, R is a fixed number in the security device, PIN is a PIN code corresponding to the F, and P is an associated code corresponding to the F.

The corresponding steps of the associated data P0 and the identification data F0 are as follows:
1. the identification device (30) enters the identification data F0, and transmits the identification data F0 to the security device (10);
2. the security device (10) with a fixed number R0 computes the hash (F0, R0) and transmits the hash (F0, R0) to the associated server (5);
3. the associated server (5) generates a random number P0 if no item corresponding to the hash (F0, R0) is queried from the user list, transmits the random number P0 to the security device (10) and the identification device (30) for display, and sets up user list items (hash (F0, R0), P0);
4. the selection device (4) enters associated data P0.

The corresponding steps of the associated data P1 and the identification data F1 are as follows:
1. the identification device (31) enters the identification data F1, and transmits the identification data F1 to the security device (11);
2. the security device (11) with a fixed number R1 computes the hash (F1, R1) and transmits the hash (F1, R1) to the associated server (5);
3. the associated server (5) generates a random number P1 if no item corresponding to the hash (F1, R1) is queried from the user list, transmits the random number P1 to the security device (11) and the identification device (31) for display, and sets up user list items (hash (F1, R1), P1);
4. the selection device (4) enters associated data P1.

The corresponding steps of the PIN0 of the selection device (4) are as follows:
1. the identification device (30) with an address S0 (receipt account S0) obtains payment amount M, and enters the identification data F0 (payment account F0); then said data (M, S0, F0) is transmitted to the security device (10) via the network (3);
2. the security device (10) receives the (M, S, F0) and the fixed number R0, and transmits the hash (F0, R0) to the associated server (5);
3. the associated server (5) searches the user list according to the hash (F0, R0) to obtain (hash (F0, R0), P0) and P0;
4. the selection device (4) connects and transmits the P0 to the associated server (5);
5. the associated server (5) transmits sm3 (hash (F0, R0)) to the selection device (4) according to the P0 corresponding to the (hash (F0, R0), P0) and the P0 of the selection device (4);
6. the selection device (4) enters the corresponding PIN0 according to the sm3 (hash (F0, R0)) and P0, and sets up user selection list items (sm3 (hash (F0, R0)), PIN0, P0).

The corresponding steps of the PIN1 of the selection device (4) are as follows:
1. the identification device (31) with an address S1 (receipt account S1) obtains payment amount M, and enters the identification data F1 (payment account F1); then said data (M,S1,F1) is transmitted to the security device (11) via the network (3);
2. the security device (11) receives the (M, S1, F1) and the fixed number R1, and transmits the hash (F1, R1) to the associated server (5);
3. the associated server (5) searches the user list according to the hash (F1, R1) to obtain (hash (F1, R1), P1) and P1;
4. the selection device (4) connects and transmits the P1 to the associated server (5);
5. the associated server (5) transmits sm3(hash (F1, R1)) to the selection device (4) according to the P1 corresponding to the (hash (F1, R1), P1) and the P1 of the selection device (4);
6. the selection device (4) enters the corresponding PIN1 according to the sm3(hash (F1, R1)) and P1, and sets up user selection list items (sm3(hash (F1, R1)), PIN1, P1).

The steps of payment-login are as follows:
1. the identification device (30) with an address S0 (receipt account S0) obtains payment amount M, and enters the identification data F0 (payment account F0); then said transaction data (M, S0, F0) is transmitted to the security device (10) via the network (2);
2. the security device (10) receives the (M, S0, F0) and the fixed number R0, and transmits the (hash (F0, R0), M) to the associated server (5);
3. the associated server (5) searches the user list according to the hash (F0, R0) to obtain (hash (F0, R0), P0) and P0;
4. the selection device (4) acquires the P0, connects and transmits the P0 to the associated server (5);
5. the associated server (5) transmits sm3(hash (F0, R0)) to the selection device (4) according to the hash (F0, R0) of the corresponding P0 and the P0 of the selection device (4);
6. the selection device (4) searches the selection list to obtain (sm3 (hash (F0, R0)), PIN0, P0) and PIN0 according to the received sm3(hash (F0, R0)), then displays the OK button, and transmits the (PIN0, P0, sm3 (hash (F0, R0))) to the associated server (5) via the network (2) after the user presses the OK button;
7. the associated server (5) obtains (hash (F0, R0), PIN0) according to the relationship between the (PIN0, P0, sm3 (hash (F0, R0))) and the hash (F0, R0), and transmits the (hash (F0, R0), PIN0) to the security device (10);
8. the security device (10) obtains (PIN0, F0) and (PIN0, M, S0, F0) matching the PIN0 according to the (M, S0, F0) and the (hash (F0, R0), PIN0), and determines whether to pay or transmit payment data (PIN0, M, S0, F0) to the acquiring bank (60) according to the relationship between the F0 and the PIN0;
9. if the payment-login data is correct, a payment-login completion message is returned to the security device (10) and then to the identification device (30), otherwise a payment-login error message is returned to the identification device (30) and/or selection device (4) via the network (2).

It is clear that the above steps are also applicable to the identification device (31) and the security device (11) corresponding to the identification data (F1), and the security device (11) obtains the corresponding PIN1, so that the selection device (4) can select and use the stored PIN0 or PIN1, that is, the stored PIN code is selected according to the information transformed through the associated server (5) from the security device (10) or security device (11).

For payment by bank, the identification device (30) is a POS terminal of the security device (10) of the acquiring bank (60), and the identification device (31) is a POS terminal distributed by the acquiring bank (61).

In the example, the key points in the payment-login process are the step 5 and the step 6. That is, the security device transmits the transformed identification data, then the selection device selects the corresponding PIN code (or identity authentication protocol, identity authentication device) according to the transformed identification data. Theoretically, the function can be realized without transformation, but the coexistence of the identification data and the identity authentication data in the selection device offsets the advantage of dual-channel information security. In addition, the random number R is configured to prevent a hacker exhaustively searching and guessing the F to obtain the combination of F and PIN code according to the hash (F) and the relationship between the hash (F) and the PIN code when the hacker completely controls the selection device (mobile phone). The R is not mandatory, but the configuration makes it securer.

Compared with example 1, example 3 can treat the associated device and the security device as the security devices of example 1.

### [Example 3] (Device)

A dual-channel identity authentication selection associated device in the example is shown in Fig. 4. The device consists of a communication device (10), a selection device (11) and an identity authentication data device (12).

The identity authentication data device (12) comprises a selection list (X, PIN), where X is selection data, PIN code is identity authentication data corresponding to the selection data, and the selection device (11) has associated data P. X is generally (hash (F,R)), where F is identification data corresponding to the PIN code, and R is a fixed number in the security device.

The use processes of the dual-channel identity authentication selection device (1) are as follows:
1. the selection device (11) connects and transmits the associated data P to an external device (2) through the communication device (10);
2. the external device (2) transmits the selection data X to the communication device (10), and then to the selection device (11);
3. the selection device (11) obtains (X, PIN) and PIN code according to the received X and the selection list of the identity authentication data (12), then displays the OK button, and transmits the (PIN, P) to the external device after the user presses the OK button.

In the examples, encryption technology is not used for some data transmission between devices. Encryption technology and key distribution for transmission between two devices, symmetric cryptosystem and public cryptosystem are well-known technologies in the prior art. Communication encryption in the examples can be realized by such technologies. For brief description, other examples will not be described here.

In the above-mentioned examples, the PIN code is entered into the selection device to indicate that identity authentication data is entered. But in fact, as the selection device is in most cases a handheld communication device having powerful computing ability, more powerful identity authentication protocols and data can be certainly used, such as zero-knowledge identity authentication protocol. In a word, the selection device transmits data for identity authentication through connection with the security device or associated server for the associated payment account to form or generate payment data together.

In the above-mentioned examples, the selection device can also realize network communication through the identification device. In fact, a channel exists between the selection device and the security device, and the identification device is just a network relay device. It is clear that the selection device shall be connected with the security device by VPN technology. The identification device and the selection device are even a device, including a physically isolated dual-computer system, or a dual-system using virtual technology. To sum up, trojans in the identification device cannot acquire any information of the selection device, and vice versa.

Obviously, the technical scheme of the invention is applicable to identity authentication selection of multiple users on multiple websites.

The method of the invention is described through the above-mentioned examples. The invention can not only be applied to bank, but also to network games and other applications needing identity authentication (account and password). Although the invention is described in the examples, it should be understood that the examples should be considered to be illustrative rather than restrictive thereto. It should be understood by a person skilled in the art that various transforms, improvements, modifications and replacements can be made without departing from the spirit and scope defined by the claims of the invention.

## Claims

1. A dual-channel identity authentication selection system, comprising:
an identification device, used for acquiring identification data and transmitting the identification data to a security device;
a selection device, used for selecting and acquiring identity authentication data and transmitting the identity authentication data to the security device;
a security device, used for acquiring the identity authentication data from the selection device according to the identification data from the identification device, and associating the identification data with the identity authentication data;
wherein the security device is respectively connected with the identification device and the selection device via network;
the identification device transmits the identification data to the security device; the security device transmits the identification data or transformed identification data to the selection device; the selection device selects the identity authentication data or generates the identity authentication data or selects the identity authentication device and the security device to interactively identify the authentication information according to the received identification data or transformed identification data; the selection device transmits the identity authentication data associated with the identification data to the security device; and the security device performs login, payment or further operations according to the identification data and the identity authentication data.

2. The system according to claim 1, **characterized by** further comprising an associated server, wherein the selection device is connected with the associated server, and the associated server is connected with the security device; the selection device acquires the identity authentication data and transmits the identity authentication data to the associated server, the associated server associates the identification data with the identity authentication data, and then transmits the identity authentication data to the security device.

3. A dual-channel identity authentication selection device, comprising:
a communication device, used for connecting a server (security device) and acquiring the transformed identification data;
a selection device, used for selecting the identity authentication data, or generating the identity authentication data, or selecting the identity authentication device and the security device to interactively identify the information according to the received transformed identification data;
an identity authentication data device, used for storing a corresponding table between the transformed identification data and the identity authentication data or device;
wherein the communication device is connected with the selection device, the communication device is connected with an external device (security device), and the selection device is connected with the identity authentication data device;
the communication device is connected with the external device, and receives the transformed identification data from the external device; the communication device transmits the transformed identification data to the selection device; the selection device selects the corresponding identity authentication data, device and method according to the transformed identification data and a selection list in the identity authentication data device; and the selection device transmits the corresponding identity authentication data to the external device through the communication device.

4. A dual-channel identity authentication selection method, comprising the following steps of:
A. transmitting the identification data from the identification device to the security device;
B. transmitting the transformed identification data from the security device to the selection device;
C. selecting the identity authentication data, or generating the identity authentication data, or selecting the identity authentication device by the selection device according to the received transformed identification data;
D. transmitting the identity authentication data associated with the identification data from the selection device to the security device; and
E. performing login, payment or further operations by the security device according to the identification data and the identity authentication data.

5. The method according to claim 4, **characterized in that** the step B comprising:
B1.transmitting the identification data or transformed identification data from the security device to the associated server; and
B2.transmitting the received or re-transformed identification data from the associated server to the selection device.

6. The method according to claim 4 or 5, **characterized in that** the identity authentication data is a PIN code.

7. The method according to claim 6, **characterized by** further comprising a step of transmitting amount data from the identification device to the security device.

8. The method according to claim 4 or 5, **characterized by** further comprising a step of transmitting the amount data from the identification device to the security device.

9. The method according to claim 7, **characterized by** further comprising a step of transmitting the amount data from the security device to a validation device.

10. The method according to claim 8, **characterized by** further comprising a step of transmitting the amount data from the security device to a validation device.
